# EUROPÄISCHE PATENTSCHRIFT

(11) **EP 0 365 806 B1**
(45) Veröffentlichungstag und Bekanntmachung des Hinweises auf die Patenterteilung: **02.02.1994**
(21) Anmeldenummer: 89116752.0
(22) Anmeldetag: 11.09.1989
(51) Int. Cl.: G01D 5/38

(54) **Winkelmesseinrichtung**
Angular-position measuring device
Dispositif de mesure de position angulaire

(30) Priorität: 28.10.1988 DE 3836703
(43) Veröffentlichungstag der Anmeldung: 02.05.1990
(73) Patentinhaber: Dr. Johannes Heidenhain GmbH, D-83292 Traunreut (DE)
(72) Erfinder: Schwefel, Ernst, Dipl.-Phys., D-8225 Traunreut (DE); Michel, Dieter, Dipl.-Ing. (FH), D-8220 Traunstein (DE); Parriaux, Olivier, Dr., CH-1003 Lausanne (CH)

(56) Entgegenhaltungen:
- EP-A- 0 262 349
- EP-A- 0 276 395
- FR-A- 2 075 408

## Beschreibung

Die Erfindung betrifft eine lichtelektrische Winkelmeßeinrichtung gemäß dem Oberbegriff des Anspruchs 1.

Derartige Winkelmeßeinrichtungen werden insbesondere bei Bearbeitungsmaschinen zur Messung der Relativlage eines Werkzeugs bezüglich eines zu bearbeitenden Werkstückes eingesetzt.

In der Dissertation "Photoelektrische Messung der Änderung von Längen- oder Winkelpositionen mit Hilfe von Beugungsgittern" von F. Hock, 1975, ist in Abb. 86 eine Winkelmeßeinrichtung zur Eliminierung des Exzentrizitätsfehlers der Winkelteilung einer Teilscheibe beschrieben, bei der der Lichtstrahl einer Lichtquelle über einen Kondensor einen ersten Winkelteilungsbereich der Winkelteilung der Teilscheibe durchsetzt und über ein erstes Pentaprisma, ein erstes Umlenkprisma und ein erstes Objektiv einem Wollastonprisma zur Aufspaltung in zwei Teilstrahlen zugeführt wird. Die beiden Teilstrahlen durchsetzen über ein zweites Objektiv, ein zweites Pentaprisma und ein zweites Umlenkprisma einen dem ersten Winkelteilungsbereich diametral gegenüberliegenden zweiten Winkelteilungsbereich der Winkelteilung der Teilscheibe und beaufschlagen über ein polarisierendes Teilerprisma zwei Photoempfänger. Diese Winkelmeßeinrichtung besitzt wegen der Vielzahl der optischen Elemente große Abmessungen und bedarf eines hohen Montage- und Justageaufwandes.

In der Druckschrift "Motion" Juli/August 1986 ist im Aufsatz "Laser Rotary Encoder" von Nishimura et al. auf den Seiten 3 und 4 eine Winkelmeßeinrichtung zur Eliminierung des Exzentrizitätsfehlers der Winkelteilung einer Teilscheibe angegeben, bei der der Lichtstrahl einer Laserdiode durch ein polarisierendes Teilerprisma in zwei Teilsstrahlen aufgespalten wird. Der erste Teilstrahl durchsetzt über eine erste Phasenplatte und einen ersten Spiegel einen ersten Winkelteilungsbereich der Winkelteilung der Teilscheibe zur Erzeugung von Beugungsstrahlen; der positive Beugungsstrahl erster Ordnung wird mittels eines ersten Reflektors durch den ersten Winkelteilungsbereich, den ersten Spiegel und die erste Phasenplatte auf das polarisierende Teilerprisma zurückgeworfen und beaufschlagt über eine dritte Phasenplatte, einen Strahlenteiler und eine erste Polarisationsplatte einen ersten Photoempfänger. Der zweite Teilstrahl durchsetzt über eine zweite Phasenplatte und einen zweiten Spiegel einen zweiten Winkelteilungsbereich der Winkelteilung der Teilscheibe zur Erzeugung von Beugungsstrahlen; der negative Beugungsstrahl erster Ordnung wird mittels eines zweiten Reflektors durch den zweiten Winkelteilungsbereich, den zweiten Spiegel und die zweite Phasenplatte auf das polarisierende Teilerprisma zurückgeworfen und beaufschlagt über die dritte Phasenplatte, den Strahlenteiler und über eine zweite Polarisationsplatte einen zweiten Photoempfänger. Auch diese relativ aufwendige Winkelmeßeinrichtung benötigt einen hohen Montage- und Justageaufwand.

Eine einfacher aufgebaute und damit preiswerter herzustellende Winkelmeßeinrichtung mit geringeren Abmessungen ist in der EP-A-0 262 349 beschrieben. Die dort offenbarte Winkelmeßeinrichtung ist unempfindlich gegen Taumelfehler des Teilungsträgers und Exzentrizitätsfehler werden eliminiert.

In der EP-A-0 276 395 wird eine lichtelektrische Meßeinrichtung beschrieben, deren Abtasteinrichtung als integriert-optische Schaltung ausgebildet ist. Dort werden jedoch keine Maßnahmen angegeben, wie Winkelmeßeinrichtungen ausgestaltet werden könnten.

Der vorliegenden Erfindung liegt die Aufgabe zugrunde, eine hochauflösende Winkelmeßeinrichtung mit noch kleinerer Bauform und noch einfacherem Aufbau zu schaffen, deren Meßgenauigkeit und Betriebssicherheit die von herkömmlichen Winkelmeßeinrichtungen übersteigt.

Diese Aufgabe wird von einer Winkelmeßeinrichtung mit den Merkmalen des Anspruches 1 gelöst.

Die Vorteile der Erfindung liegen in der durch die integriert-optische Bauweise der Abtasteinrichtung extrem geringen Größe der Winkelmeßeinrichtung und in der Unempfindlichkeit gegenüber Umgebungseinflüssen.

Vorteilhafte Ausgestaltungen der Meßeinrichtung entnimmt man den abhängigen Ansprüchen.

Mit Hilfe von Ausführungsbeispielen wird die Erfindung anhand der Zeichnungen noch näher erläutert.

Es zeigt
- Figur 1: eine Winkelmeßeinrichtung mit Streifenwellenleitern und Koppler;
- Figur 2: eine Winkelmeßeinrichtung mit Schichtwellenleiter und Fokussiergittern;
- Figur 3: eine Winkelmeßeinrichtung mit Schichtwellenleiter und Kollimationsgittern;
- Figur 4A: eine Winkelmeßeinrichtung in Zylinderbauform im Schnitt;
- Figur 4B: eine Teildraufsicht auf die Winkelmeßeinrichtung gemäß Figur 4A;
- Figur 4C: eine Ansicht einer Abtasteinrichtung für die Winkelmeßeinrichtung gemäß Figur 4A;

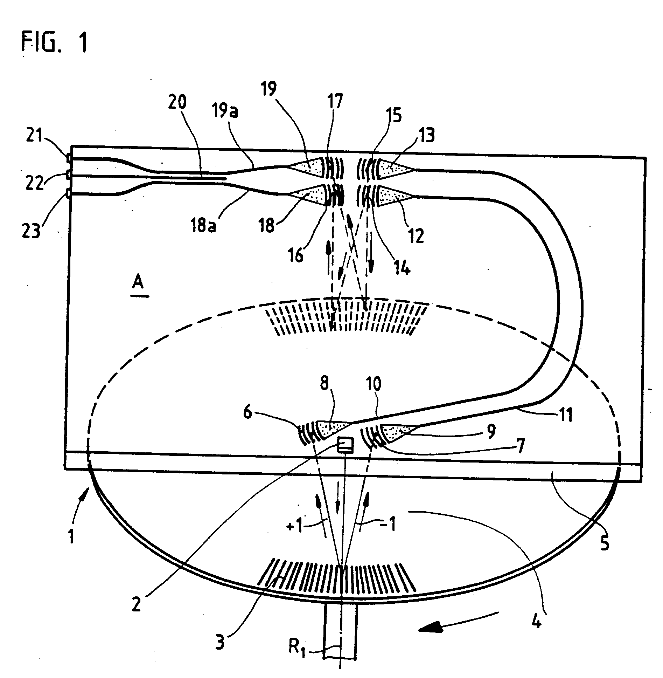

Bei der in Figur 1 schematisch dargestellten Winkelmeßeinrichtung 1 fällt an einem ersten Abtastbereich Licht eines Lasers 2 auf eine Kreisteilung 3 einer Teilscheibe 4. An der als Phasengitter ausgebildeten Kreisteilung 3 wird das Licht gebeugt und zwei Teilstrahlenbündel +1 und -1 erster Beugungsordnung werden reflektiert. Weitere Beugungsordnungen werden nicht ausgewertet.

Der Laser (Halbleiterlaser) 2 ist auf einem Substrat 5 integriert, welches Träger für eine monolithisch integrierte optische Schaltung ist, von der die Abtasteinrichtung A gebildet wird. Die Abtasteinrichtung A als monolithisch integrierte optische Schaltung umfaßt u.a. zwei Einkoppelgitter 6 und 7. Auf das Einkoppelgitter 6 trifft das reflektierte Teilstrahlenbündel +1 positiver erster Ordnung und auf das Einkoppelgitter 7 trifft das reflektierte Teilstrahlenbündel -1 negativer erster Ordnung.

Von den fokussierenden Einkoppelgittern 6 und 7 wird das gebeugte Licht in Streifenwellenleiter 10 und 11 eingespeist.

Das Licht der gebeugten Teilstrahlenbündel +1 und -1 wird in den Streifenwellenleitern 10 und 11 auf dem Substrat 5 zu einem diametral gelegenen zweiten Abtastbereich geleitet. Den Streifenwellenleitern 10 und 11 folgen Auskoppelgitter 14 und 15, die das Licht der gebeugten Teilstrahlenbündel +1 und -1 auf die Kreisteilung 3 umlenken. Es wird dort nochmals gebeugt, weiteren Einkoppelgittern 16, 17 zugeführt und über weitere Wellenleiter 18ₐ, 19ₐ in einen Koppler 20 eingespeist. Dort werden die Teilstrahlenbündel der +1. und der -1. Ordnung zur Interferenz gebracht, so daß am Ausgang des Kopplers 20 drei phasenverschobene Lichtbündel von drei Detektoren 21, 22 und 23 erfaßt werden können.

Aufgrund der Relativbewegungen zwischen der Abtasteinrichtung A und der Teilscheibe 4 ändern sich die Phasenlagen der an der Kreisteilung 3 zweimal gebeugten Strahlenbündel, so daß Signale erzeugt werden, deren Perioden ein viertel der Teilungsperiode der Kreisteilung entsprechen.

Durch die doppelte Abtastung an diametralen Abtastbereichen wird eventuell vorhandene Exzentrizität eliminiert.

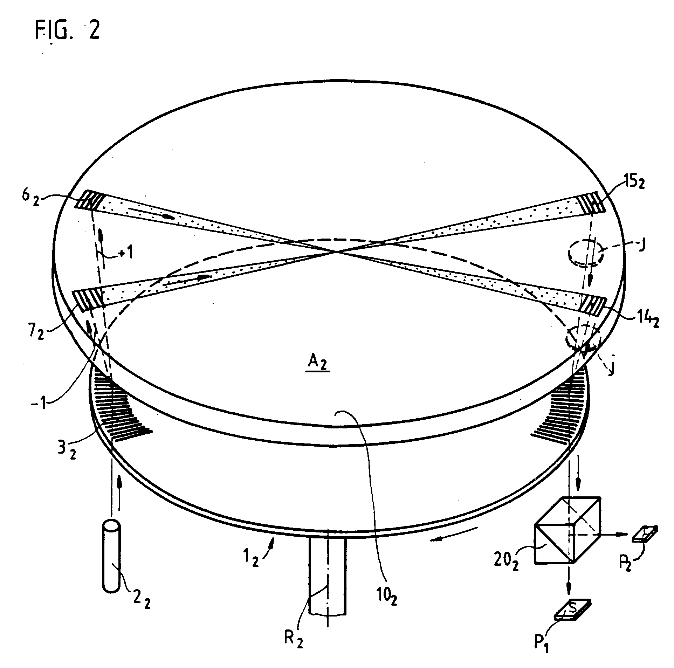

Ein weiteres Ausführungsbeispiel ist in Figur 2 dargestellt, diese Anordnung arbeitet im Durchlicht. Von einem Halbleiterlaser 2₂ kommendes Licht wird an einer als Phasengitter ausgebildeten Kreisteilung 3₂ gebeugt. Die Teilstrahlenbündel der +1 und -1 Beugungsordnung treffen auf fokussierende Einkoppelgitter 6₂ und 7₂, von denen aus sie mittels eines Schichtwellenleiters 10₂ zu diametral angeordneten Auskoppelgittern 14₂ und 15₂ geleitet werden. Im Brennpunkt der fokussierenden Einkoppelgitter 6₂ und 7₂ kreuzen sich die Teilstrahlenbundel +1 und -1 ohne sich gegenseitig zu beeinflussen. Die Auskoppelgitter 14₂ und 15₂ lenken die Teilstrahlenbündel +1 und -1 wieder um, so daß sie von der Kreisteilung 3₂ erneut gebeugt werden. Die beiden Teilstrahlenbündel +1 und -1 werden nach Durchsetzen von polarisationsoptischen Mitteln (J) im polarisationsoptischen Teilerprisma 20₂ zur Interferenz gebracht und und fallen auf zwei Photodetektoren P₁ und P₂, die zwei um 90° zueinander phasenverschobene periodische Abtastsignale liefern. Auch bei diesem Ausführungsbeispiel tritt bei den Abtastsignalen ein Vervierfachungseffekt hinsichtlich der Frequenz auf und die Exzentrizität wird eliminiert.

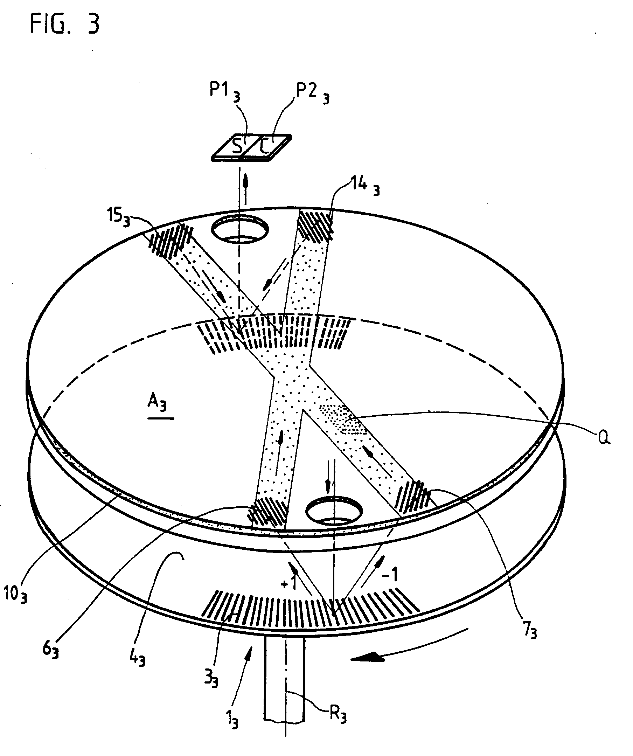

Figur 3 zeigt wieder eine sogenannte Auflicht-Winkelmeßeinrichtung 1₃. Ein nicht dargestellter Laser strahlt durch eine Öffnung in einem Schichtwellenleiter 10₃ auf eine Kreisteilung 3₃, die sich auf einer Teilscheibe 4₃ befindet. Durch Beugung am Phasengitter der Kreisteilung 3₃ werden u.a. Teilstrahlenbündel +1 und -1 der positiven ersten Beugungsordnung und der negativen ersten Beugungsordnung erzeugt und auf kollimierende Einkoppelgitter 6₃ und 7₃ reflektiert. Die kollimierten Teilstrahlenbündel +1 und -1 werden in einen Schichtwellenleiter 10₃ eingespeist und zu diametral angeordneten Auskoppelgittern 14₃ und 15₃ geleitet.

Der Schichtwellenleiter 10₃ weist in einem Bereich, den einer der beiden Teilstrahlenbündel +1 und -1 bei der Leitung zum zugehörigen diametralen Auskoppelgitter 14₃, 15₃ passieren muß, ein Element Q zur Phasenschiebung auf, so daß eine Hälfte eines der Teilstrahlenbündel +1 oder -1 phasenverschoben in sein Auskoppelgitter 14₃ oder 15₃ eintritt.

Die Auskoppelgitter 14₃ und 15₃ lenken die Teilstrahlenbündel +1 und -1 wieder auf die Kreisteilung 3₃, wo sie zur Interferenz gebracht und durch eine weitere Öffnung im Schichtwellenleiter 10₃ auf Detektoren P1₃ und P2₃ reflektiert werden. Die Detektoren P1₃ und P2₃ liefern wieder zueinander phasenverschobene Abtastsignale der Art, wie bereits vorstehend beschrieben.

Das Element Q zur Phasenschiebung kann ein Bereich im und/oder am Schichtwellenleiter 10₃ sein, der über eine berechenbare Breite und Länge einen anderen Brechungsindex aufweist, als der des Schichtwellenleiters.

Auch dieses Aüsfuhrungsbeispiel ist besonders vorteilhaft als integriert-optische Schaltung aufzubauen.

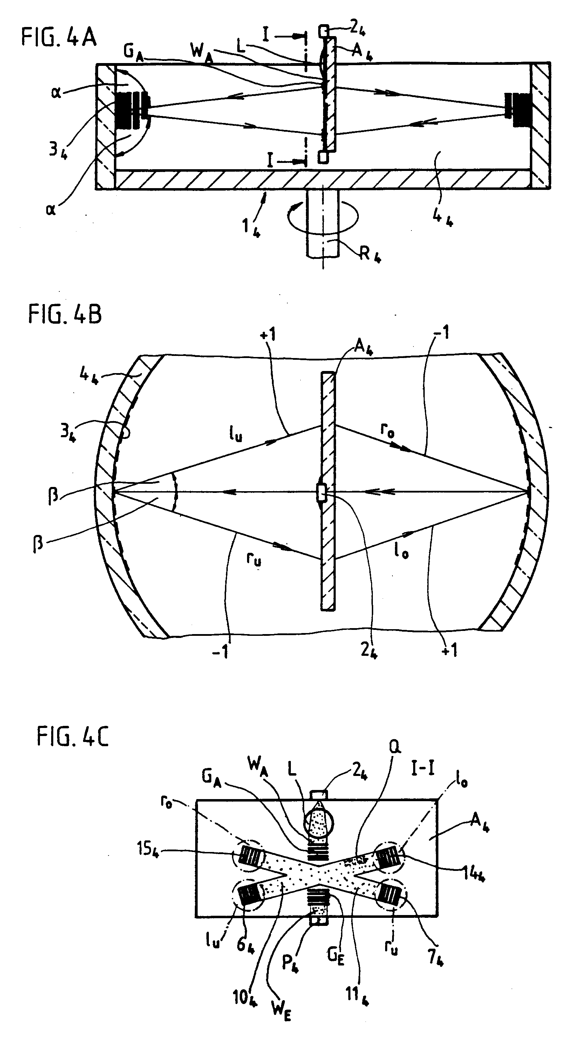

In den Figuren 4 und 5 ist eine andere Bauart von Winkelmeßeinrichtungen beschrieben, als die drei vorausbetrachteten Ausführungsformen. In Figur 4A ist ein sogenannter Trommelgeber im Schnitt dargestellt. An der Innenwand eines um seine Rotationsachse R₄ drehbaren Zylinders 4₄ ist eine Meßteilung 3₄ aufgebracht, die aus Gründen der Übersichtlichkeit nicht vollständig gezeigt ist. Im Zentrum des Zylinders 4₄ befindet sich als integriert-optische Schaltung eine stationäre Abtasteinrichtung A₄, deren Ansicht in Figur 4C dargestellt ist. Figur 4B zeigt ausschnittsweise eine Draufsicht.

Für die Erläuterung der Abtastung ist es erforderlich alle drei Teildarstellungen der Figuren 4A, 4B und 4C gedanklich zu kombinieren, da sich räumlich verlaufende Strahlengänge ergeben, deren zeichnerische Darstellungsmöglichkeiten sehr begrenzt sind. Aus diesem Grund werden auch Begriffe wie "oben", "unten", "rechts", "links", "hinten", "vorne" und dgl. verwendet, die zwar nicht der Fachsprache der Optik entnommen sind, aber zum Verständnis der Erfindung beitragen sollen.

Ein Halbleiterlaser 2₄ strahlt Licht ab, das von einer integriert-optischen Kollimator-Linse L in einem Wellenleiter W_{A} kollimiert wird. Mittels eines Auskoppelgitters G_{A} wird das Licht auf die Meßteilung 3₄ des Zylinders 4₄ gerichtet. Dieser Strahlengang verläuft unter einem Winkel α zur Rotationsachse R₄ des Zylinders 4₄ geneigt vom Auskoppelgitter G_{A} zur Meßteilung 3₄. Dort wird er reflektiert und gebeugt, so daß die beiden Teilstrahlenbündel +1 und -1 der positiven und der negativen ersten Ordnung, unter dem gleichen Winkel α zur Rotationsachse R₄ des Zylinders 4₄ geneigt auf Einkoppelgitter 6₄ und 7₄ auf der Abtasteinrichtung A₄ gerichtet sind. Die Teilstrahlenbündel +1 und -1 unterliegen aber zusätzlich noch dem Beugungswinkel β, was aus Figur 4B ersichtlich ist. Das Teilstrahlenbündel +1 trifft also "linksunten" (lu) auf das Einkoppelgitter 6₄ und das Teilstrahlenbündel -1 trifft "rechtsunten" (ru) auf das Einkoppelgitter 7₄. Wellenleiter 10₄ und 11₄ leiten die Teilstrahlenbündel +1 und -1 zu gegenüberliegenden Auskoppelgittern 14₄ und 15₄ (s. Figur 4C). Daß sich die beiden Wellenleiter 10₄ und 11₄ kreuzen, hat wegen der gewählten Geometrie keinen spürbaren Einfluß auf die Ausbreitung der Teilstrahlenbündel +1 und -1.
Das Auskoppelgitter 14₄ befindet sich oberhalb des Einkoppelgitters 7₄ (rechtsunten). Da es jedoch das Auskoppelgitter für den "linken Kanal" darstellt, ist es nur scheinbar falsch, wenn es als "linksoben" (lo) bezeichnet wird. In gleicher Weise ist es nur scheinbar falsch, wenn das Auskoppelgitter 15₄ als "rechtsoben" (ro) bezeichnet wird, da es sich oberhalb des linken unteren Einkoppelgitters 6₄ befindet.

Diese scheinbare Unstimmigkeit wird dann verständlich, wenn der weitere Strahlengang erläutert wird: Angenommen, die in Figur 4C betrachtete Ansicht des Substrates der Abtasteinrichtung A₄ gilt als Vorderseite, dann wirken die Auskoppelgitter 14₄ und 15₄ zur Rückseite des Substrates. Wenn die Abtasteinrichtung A₄ lagerichtig in den Figuren 4A und 4B betrachtet wird, dann befinden sich die Auskoppelgitter 14₄ "linksoben" und 15₄ "rechtsoben", wenn der Blick auf die Rückseite des Substrates gerichtet ist.

Das Teilstrahlenbundel +1, welches per Wellenleiter 10₄ vom Einkoppelgitter 6₄ (linksunten) zum Auskoppelgitter 14₄ (linksoben) geleitet wurde, wird auf einen Bereich der Meßteilung 3₄ gerichtet, der dem eingangs beschriebenen Bereich gegenüberliegt, wodurch wieder eine diametrale Abtastung realisiert werden kann.

Das Teilstrahlenbündel -1, welches per Wellenleiter 11₄ vom Einkoppelgitter 7₄ (rechtsunten) zum Auskoppelgitter 15₄ (rechtsoben) geleitet wurde, wird ebenfalls auf den vorerwähnten Bereich der Meßteilung 3₄ gerichtet. Die Teilstrahlenbündel +1 und -1 werden gebeugt, zur Interferenz gebracht (die Phasenschiebung kann dabei in ähnlicher Weise erfolgen, wie bereits zur Figur 3 beschrieben wurde) und reflektiert, so daß das resultierende Strahlenbündel auf ein Einkoppelgitter G_{E} auf dem Substrat der Abtasteinrichtung A₄ gerichtet ist. Dort wird es in die Ebene eines Wellenleiters W_{E} umgelenkt und wenigstens ein Photodetektor P₄ wandelt das intensitätsmodulierte Strahlenbündel in ein elektrisches Ausgangssignal um.

Ein- und Auskoppelgitter können so gestaltet werden (z.B.: geblazte Gitter, mit Reflexionsschichten versehene Gitter, usw.), daß sie je nach Anwendungsfall nur in eine oder in mehrere Richtungen auskoppeln, oder aus einer oder mehreren Richtungen einkoppeln.

Die in den Ausführungsbeispielen gezeigten Bauformen und geometrischen Anordnungen sind selbstverständlich stark schematisiert, da sich die tatsächlichen Verhältnisse in optisch-integrierten Schaltungen zeichnerisch kaum realistisch darstellen lassen.

## Patentansprüche

1. Lichtelektrische Winkelmeßeinrichtung (1) mit einem eine Kreisteilung (3) tragenden Teilungsträger (4), und einer Abtasteinrichtung (A) zum diametralen Abtasten der Kreisteilung (3), dadurch gekennzeichnet, daß die Abtasteinrichtung (A) als integriert-optische Schaltung ausgebildet ist, die an diametralen Abtastbereichen wenigstens zwei Einkoppelelemente (6, 7, 8, 9) und Auskoppelelemente (12, 13, 14, 15) aufweist, wobei die Auskoppelelemente (12, 13, 14, 15) über Lichtwellenleiter mit den zugeordneten Einkoppelelementen (6, 7, 8, 9) verbunden sind.

2. Lichtelektrische Winkelmeßeinrichtung nach Anspruch 1, dadurch gekennzeichnet, daß den Auskoppelelementen (12, 13, 14, 15) weitere Einkoppelelemente (16, 17, 18, 19) zugeordnet sind, die über weitere Lichtwellenleiter (18a, 19a) mit Eingängen eines Kopplers (20) verbunden sind, dessen Ausgänge Sensoren (21, 22, 23) zugeordnet sind.

3. Lichtelektrische Winkelmeßeinrichtung nach Anspruch 2, dadurch gekennzeichnet, daß die Einkoppelelemente (6, 7, 8, 9) bzw. (16, 17, 18, 19) aus Einkoppelgittern (6, 7 bzw. 16, 17) und optischen Verengungen (8, 9, bzw. 18, 19) bestehen, und daß die Auskoppelelemente (12, 13, 14, 15) aus optischen Aufweitungen (12, 13) und Auskoppelgittern (14, 15) bestehen.

4. Lichtelektrische Winkelmeßeinrichtung nach Anspruch 1, dadurch gekennzeichnet, daß die Abtasteinrichtung (A₂) fokussierende Einkoppelgitter (6₂ bzw. 7₂) aufweist, die über Wellenleiter (10₂) mit zugeordneten Auskoppelgittern (14₂ bzw. 15₂) verbunden sind, und daß den Auskoppelgittern (14₂ bzw. 15₂) zumindest polarisationsoptische Elemente (J) optisch nachgeschaltet sind.

5. Lichtelektrische Winkelmeßeinrichtung nach Anspruch 4, dadurch gekennzeichnet, daß der Wellenleiter (10₂) als Schicht- oder Streifenwellenleiter ausgebildet ist.

6. Lichtelektrische Winkelmeßeinrichtung nach Anspruch 1, dadurch gekennzeichnet, daß die Abtasteinrichtung (A₃, A₄) kollimierende Einkoppelgitter (6₃, 6₄ bzw. 7₃, 7₄) aufweist, die über Wellenleiter (10₃, 10₄, 11₄) mit zugeordneten Auskoppelgittern (14₃, 14₄ bzw. 15₃, 15₄) verbunden sind, und daß zumindest im optischen Pfad von einem Einkoppelgitter (6₃, 6₄ oder 7₃, 7₄) zu einem Auskoppelgitter (14₃, 14₄ oder 15₃, 15₄) ein Element (Q) zur Phasenschiebung vorgesehen ist.

7. Lichtelektrische Winkelmeßeinrichtung nach Anspruch 1 und Anspruch 6, dadurch gekennzeichnet, daß die Winkelmeßeinrichtung (1₃)eine Teilscheibe (4₃) mit radialer Kreisteilung (3₃) aufweist, und daß die Abtasteinrichtung (A₃) parallel zur Teilscheibe (4₃) also senkrecht zur Rotationsachse (R₃) angeordnet ist.

8. Lichtelektrische Winkelmeßeinrichtung nach Anspruch 6, dadurch gekennzeichnet, daß der Wellenleiter (10₃, 10₄, 11₄) als Schicht- (10₃) oder Streifenwellenleiter (10₄, 11₄) ausgebildet ist.

9. Lichtelektrische Winkelmeßeinrichtung nach Anspruch 6, dadurch gekennzeichnet, daß das Element (Q) zur Phasenschiebung ein Bereich im und/oder am Wellenleiter (10₃, 10₄) ist, dessen Brechungsindex vom Brechungsindex des Wellenleiters (10₃, 10₄) abweicht.

10. Lichtelektrische Winkelmeßeinrichtung nach Anspruch 1, 6 und 10, dadurch gekennzeichnet, daß die Winkelmeßeinrichtung (1₄) einen Zylinder (4₄) mit konzentrischer Kreisteilung (3₄) aufweist, und daß die Abtasteinrichtung (A₄) im wesentlichen zentrisch, parallel zur Rotationsachse (R₄) angeordnet ist.

## Claims

1. Photoelectric angular-position measuring device (1) with a divider support (4) provided with a circle graduation (3) and a sensing device (A) for diametrical scanning of said circle graduation (3), Characterised in that said sensing device (A) is provided in the form of an integrated optical circuit having at least two input coupling elements (6, 7, 8, 9) and output coupling elements (12, 13, 14, 15) on diametric scanning areas, said output coupling elements (12, 13, 14, 15) being connected to the assigned input coupling elements (6, 7, 8, 9) via light wave conductors.

2. Photoelectric angular-position measuring device according to Claim 1, characterised in that further input coupling elements (16, 17, 18, 19) are assigned to the output coupling elements (12, 13, 14, 15), which are connected via further light wave conductors (18a, 19a) to the inputs of a coupler (20), sensors (21, 22, 23) being assigned to the outputs of said coupler (20).

3. Photoelectric angular-position measuring device according to Claim 2, characterised in that the input coupling elements (6, 7, 8, 9) and (16, 17, 18, 19) comprise input coupling gratings (6, 7 and 16, 17 respectively) and optical contraction sections (8, 9 and 18, 19 respectively); and that the output coupling elements (12, 13, 14, 15) comprise optical expansion sections (12, 13) and output coupling gratings (14, 15).

4. Photoelectric angular-position measuring device according to Claim 1, characterised in that the sensing device (A₂) has focusing input coupling gratings (6₂ and 7₂), which are connected via waveguides (10₂) to assigned output coupling gratings (14₂ and 15₂ respectively); and that at least photoelastic elements (J) are optically coupled to said output coupling gratings (14₂ and 15₂ respectively) at the outlet side.

5. Photoelectric angular-position measuring device according to Claim 4, characterised in that the Waveguide (10₂) is provided in the form of a layer or strip waveguide.

6. Photoelectric angular-position measuring device according to Claim 1, characterised in that the sensing device (A₃, A₄) is provided with collimating input coupling gratings (6₃, 6₄ or 7₃, 7₄), which are connected via waveguides (10₃, 10₄, 11₄) to assigned output coupling gratings (14₃, 14₄ or 15₃, 15₄); and that an element (Q) is provided for phase shifting at least in the optical path from an input coupling grating (6₃, 6₄ or 7₃, 7₄) to an output coupling grating (14₃, 14₄ or 15₃, 15₄).

7. Photoelectric angular-position measuring device according to Claim 1 and claim 6, characterized in that the angular-position measuring device (1₃) is provided with a divider plate (4₃) with radial circle graduation (3₃); and that the sensing device (A₃) is arranged parallel to said divider plate (4₃), i.e. is vertical to the rotational axis (R₃).

8. Photoelectric angular-position measuring device according to Claim 6, characterised in that the waveguide (10₃, 10₄, 11₄) is provided in the form of a layer (10₃) or strip waveguide (10₄, 11₄).

9. Photoelectric angular-position measuring device according to Claim 6, characterised in that the phase-shifting element (Q) is an area in and/or on the Waveguide (10₃, 10₄), the refractive index of which deviates from the refractive index of said waveguide (10₃, 10₄).

10. Photoelectric angular-position measuring device according to Claims 1 and 6, characterised in that the angular-position measuring device (1₄) is provided with a cylinder (4₄) with concentric circle graduation (3₄); and that the sensing device (A₄) is arranged parallel to the rotational axis (R₄) so as to be essentially centric.

## Revendications

1. Dispositif photo-électrique de mesure d'angles (1) comportant un support de graduations (4) portant une graduation circulaire (3) et un dispositif de lecture (A) pour la lecture de la graduation circulaire (3) suivant un diamétre, caractérisé par le fait que le dispositif de lecture (A) est agencé sous forme de circuit optique intégré qui comporte dans des zones de lecture diamétralement opposées, au moins deux éléments de couplage (6, 7, 8, 9) et de découplage (12, 13 14, 15), les éléments de découplage (12, 13, 14, 15) étant connectés aux éléments de couplage (6, 7, 8, 9) associés par l'intermédiaire de guides de lumière.

2. Dispositif photo-électrique de mesure d'angles selon la revendication 1, caractérisé par le fait que des éléments de couplage (16, 17, 18, 19) supplémentaires sont associés aux éléments de découplage (12, 13, 14, 15), lesquels éléments de couplage, par l'intermédiaire de guides de lumière (18a, 19a) supplémentaires, sont connectés à des entrées d'un coupleur (20) dont les sorties sont associées à des capteurs (21, 22, 23).

3. Dispositif photo-électrique de mesure d'angles selon la revendication 2, caractérisé par le fait que les éléments de couplage (6, 7, 8, 9) et (16, 17, 18, 19) sont constitués par des réseaux de couplage (6, 7 et 16, 17) et des convergents optiques (8, 9, et 18, 19) et par le fait que les éléments de découplage (12, 13, 14, 15) sont constitués par des divergents optiques (12, 13) et des réseaux de découplage (14, 15).

4. Dispositif photo-électrique de mesure d'angles selon la revendication 1, caractérisé par le fait que le dispositif de lecture (A₂) comporte des réseaux de couplage (6₂ et 7₂) à action focalisante qui sont connectés à des réseaux de découplage (14₂ et 15₂) associés par l'intermédiaire de guides d'ondes (10₂) et par le fait qu'au moins des éléments de polarisation optique (J) sont montés à la suite des réseaux de découplage (14₂ ou 15₂).

5. Dispositif photo-électrique de mesure d'angles selon la revendication 4, caractérisé par le fait que le guides d'ondes (10₂) est agencé sous forme de guide d'ondes en couches ou en bandes.

6. Dispositif photo-électrique de mesure d'angles selon la revendication 1, caractérisé par le fait que le dispositif de lecture (A₃, A₄) comporte des réseaux de couplage (6₃, 6₄ et 7₃, 7₄) à action collimatrice qui sont connectés à des réseaux de découplage (14₂, 14₃ et 15₃, 15₄) associés par l'intermédiaire de guides d'ondes (10₃, 10₄, 11₄) et par le fait qu'il est prévu au moins un élément (Q) de déphasage sur le trajet optique entre un réseau de couplage (6₃, 6₄ et 7₃, 7₄) et un réseau de découplage (14₂, 14₃ et 15₃, 15₄).

7. Dispositif photo-électrique de mesure d'angles selon les revendications 1 et 6, caractérisé par le fait que le dispositif mesure d'angles (1₃) comporte un disque gradué (4₃) portant une graduation circulaire (3₃) et par le fait que le dispositif de lecture (A₃) est disposé parallèlement au disque gradué (4₃), c'est-à-dire perpendiculairement à l'axe de rotation (R₃).

8. Dispositif photo-électrique de mesure d'angles selon la revendication 6, caractérisé par le fait que le guide d'ondes (10₃, 10₄, 11₄) est agencé sous forme de guide d'ondes en couches (10₃) ou en bandes (10₄, 11₄).

9. Dispositif photo-électrique de mesure d'angles selon la revendication 6, caractérisé par le fait que l'élément de déphasage (Q) est une zone dans et/ou sur le guide d'ondes (10₃, 10₄) dont l'indice de réfraction est différent de l'indice de réfraction du guide d'ondes (10₃, 10₄).

10. Dispositif photo-électrique de mesure d'angles selon les revendications 1 et 6, caractérisé par le fait que le dispositif de mesure d'angles (1₄) comporte un cylindre (4₄) avec une graduation circulaire (3₄) concentrique et par le fait que le dispositif de lecture (A₄) est disposé sensiblement au centre, parallèlement à l'axe de rotation (R₄).
